# EUROPEAN PATENT SPECIFICATION

(11) **EP 2 334 491 B1**
(45) Date of publication and mention of the grant of the patent: **13.02.2013**
(21) Application number: 09736354.3
(22) Date of filing: 06.10.2009
(51) Int. Cl.: B32B 1/08, B32B 5/02, B32B 25/00

(54) **REINFORCED COMPOSITE MATERIAL AND PREPARATION METHOD AND APPLICATIONS THEREOF**
VERSTÄRKTES VERBUNDSTOFFMATERIAL UND HERSTELLUNGSVERFAHREN UND ANWENDUNGEN DAFÜR
MATÉRIAU COMPOSITE RENFORCÉ ET PROCÉDÉ DE PRÉPARATION ET APPLICATIONS DE CELUI-CI

(30) Priority: 06.10.2008 CN 200810166180
(43) Date of publication of application: 22.06.2011
(73) Proprietor: E. I. du Pont de Nemours and Company, Wilmington, DE 19898 (US)
(72) Inventor: LI, Xuedong, Shanghai (CN); SHI, Johnason, Shanghai 200060 (CN)
(74) Representative: Dannenberger, Oliver Andre
(86) International application number: PCT/US2009/059618
(87) International publication number: WO 2010/042465

(56) References cited:
- US-A- 4 978 409
- DATABASE WPI Week 200835 Thomson Scientific, London, GB; AN 2008-F13500 XP002557248 -& JP 2008 068461 A (TOYODA GOSEI KK) 27 March 2008 (2008-03-27)
- DATABASE WPI Week 200575 Thomson Scientific, London, GB; AN 2005-728640 XP002557249 -& JP 2005 273063 A (SHOKUICHI KK) 6 October 2005 (2005-10-06)

## Description

### BACKGROUND OF THE INVENTION

### 1. Field of the Invention

The present invention relates to a kind of reinforced composite material. Specifically, the present invention relates to a reinforced elastomer of an aromatic polyamide, and it also relates to the preparation method and applications of that kind of reinforced composite material.

### 2. Description of Related Art

High strength composite materials (such as fiber-reinforced elastomer composite material) have the advantages of high strength, light weight, anti corrosion, etc. and they are comprehensively applied in construction, transportation apparatus and equipment as well as manufacturing fields.

There are mainly two kinds of fiber-reinforced elastomer composite materials, one kind is the short fiber-reinforced composite material composed by a short fiber mixture in elastomer materials, and the other kind is an elastomer composite material that is formed by the layer of elastomer or elastomer mixed with short reinforced fibers and the layer of woven reinforced fibers or nonwoven reinforced fibers. Among the two kinds of fiber composite materials, the overall strength of the former is lower than that of the later, and therefore the later needs to be used to make engineering parts in architecture engineering and manufacturing industry.

Among the elastomer composite materials formed by the layer of elastomer or elastomer mixed with short reinforced fiber and the layer of woven reinforced fiber or nonwoven reinforced fiber, the organic composite material formed by the layer of aromatic polyamide fiber and the layer of organic silicon elastomer is a kind of high end and environmentally friendly product, and it has the advantages of light weight, high strength, anti-chemical corrosion and fire retardancy. It can be applied in the manufacturing of the ripple coupling fork that connects two rail cars of a train, the manufacturing of the connection portion of high pressure pipes, the manufacturing of automobiles and industrial pipelines, etc.

Aromatic polyamide has a very inert surface. Compared with other synthetic fibers (such as nylon and polyester), its surface is difficult to be activated. When aromatic polyamide is used in reinforced polymer materials, especially elastomers, in order to prevent interface breaking up, the surface of aromatic polyamide needs to be processed to improve the joint between that fiber and the fiber to be reinforced. Two methods are mainly used in the connection of the existing laminated composite materials composed of aromatic polyamide fiber and elastomer. One method is to chemically process the surface of the fiber, and the other is to weave loose fibers.

The most commonly used surface processing method includes chemical activation with an active chemical agent. For example, the surface is first processed with an epoxy resin or isocyanide, and then it is immersed in resorcinol formaldehyde latex (RFL) adhesives. This method of first chemical activation and then soaking in resorcinol formaldehyde latex adhesives is widely used in the surface processing of rubber products, such as rubber reinforced with aromatic polyamide (for example, the natural rubber or styrene-butadiene used in tire and conveyer industry and chloroprene rubber used in the conveyer industry).

As early as 1961, U.S. patent 2,990,313 invented by Knowles, et al., disclosed the processing of polyester fiber with butadiene-vinylpyridine latex to improve the adhesion with rubber. This method is commonly known as RFL immersing method. U.S. patent 3,307,966 invented by Shoaf disclosed the immersing processing method of surface immersing in epoxy resin and isocyanide and then immersing in RFL. The development of the technology disclosed in these two patents formed the two-step immersing method that is widely used at present to improve the adhesion of polyester or aromatic polyamide with elastomers.

U.S. patent 6,896,930 B2 invented by Fukuyama disclosed a similar two-step immersing method. This method can achieve very good adhesion strength. However, this method requires a large amount of raw materials such as resorcin, formaldehyde, ammonia, water, isocyanide, or epoxy resin, etc. In addition, this method requires a complicated immersing agent, and complicated immersing equipment as well as processing procedures (such as low temperature curing, drying, solidifying, heat elongation, etc. of the immersing liquid). In addition, when isocyanide is used, the method requires the use of toxic volatile solvent, such as toluene, and the storage of RFL immersing liquid is limited, and it must be used up within a specified time frame. When different elastomer is used, corresponding variety of latex must be chosen according to the selected variety of elastomer to achieve ideal adhesion.

Another method of adhesion of the layer of aromatic polyamide and the layer of elastomer is to weave the aromatic polyamide fibers into a kind of loose textile, and then the holes on the loose textile are used as the stabilization points for anchoring the elastomer. For example, U.S. patent 5,763,043 invented by John Porter, et al., used a kind of open web textile. Although this method can be used to make strong composite material without falling [peeling off] of layer, due to the strength of the loose textile is lower than that of the normal density textile, the strength of this kind of composite material can be decreased inevitably, and it is difficult to satisfy the requirements of high strength applications. In addition, if relatively condensed textile is used to improve the strength of the composite material, the viscosity of the coating material must be relatively low or the liquid coating material is easily permeated and then it is solidified. For example, this method can be referred in Chapter 3 of Coated and laminated Textiles, by Water Fung (Coated and laminated Textiles, Chapter 3, Woodhead Press, 2002), but this method will greatly decrease the design space of the formulation of the coating material.

Therefore, for the existing technology, it tries to seek a kind of surface processing method of aromatic polyamide fiber through all kinds of methods, it should be convenient and have a good processing effect, i.e., the layer of aromatic polyamide fiber and the layer of elastomer should have the adhesion strength as high as possible.

US patent 4,968,560 with assignee of a German, Degussa Aktiengesellschaft disclosed a kind of aromatic polyamide that is used to reinforce epoxy resin. Specifically, it disclosed the surface processing method of that kind of aromatic polyamide, i.e., the textile of aromatic polyamide fiber is immersed in an organic silicone solution at the temperature of 5 to 40°C for 1 to 120 minutes, then dried at room temperature, and then processed with heat at the temperature of 60 to 120°C for 0.1 to 15 hours. The final preferred embodiment proved that if that method is used to process aromatic polyamide fibers, the joint strength (i.e., peeling strength) between the aromatic polyamide fiber and epoxy resin can be improved by 38.5% at the most. However, this joint strength still cannot satisfy the requirements of many special applications.

Japanese unexamined patent JP 2002-194669 disclosed a kind of aromatic polyamide fiber that had good joint with a kind of substrate resin, and this kind of fiber can form a kind of composite material with thermoplastic base resin or thermosetting substrate resin. The method of surface processing of the above mentioned aromatic polyamide fiber is to immerse the fiber into a surface processing liquid comprised of a film forming agent, a silane coupling agent and a surfactant, then it is processed with heat under the temperature of 80 to 400°C. It is proved in the preferred embodiment that the aromatic polyamide fiber with the surface processed with this method, the joint strength between the aromatic polyamide fiber and the substrate resin can be improved for 36% at the most. Still, this joint strength cannot satisfy the requirements of many special applications.

In addition, it is demonstrated by the data in that disclosed literature, that the processing method must use aromatic polyamide fibers having a high water content (at least 15%), and the window processing technique is very narrow. The major shortcoming of using fibers having a high water content is that the weight of the aromatic polyamide fiber is heavy. When a single strand or multiple strands of fibers is used to reinforce the materials such as the substrate resin, and the shortcoming generated by weight increase is not very significant. However, if the textile woven by fibers with high water content is used to reinforce the substrate resin, significant increase in water content will ultimately increase the weight of the reinforced resin product, which is not favorable for the applications that are very sensitive to weight.

Therefore, although the above mentioned existing technical methods improve the joint strength between the reinforced fiber and the substrate resin through the surface processing of the aromatic polyamide fiber, the existing technical methods either have complicated processing technique or limited design space, or the joint strength still cannot satisfy the requirements of some special composite materials. Therefore, it is still necessary to develop the composite materials that have convenient processing technique, more product design space, and higher joint strength between the elastomer and the aromatic polyamide fiber.

The objective of the present invention is to provide a kind of composite material that has higher joint strength between the elastomer and the reinforced aromatic polyamide fiber, while having a simple processing technique and very flexible product design space.

Another objective of the present invention is to provide a manufacturing method of said composite material, and it has the advantage of simple processing and it is environmentally friendly.

Another objective of the present invention is to provide the applications of said composite material.

### BRIEF SUMMARY OF THE INVENTION

Thus, one perspective of the present invention is to provide a kind of laminated composite material, which at least has a layer of elastomer and a layer of textile of aromatic polyamide fiber, and the surface of said textile of aromatic polyamide fiber is processed by silane.

Another perspective of the present invention is to provide a kind of manufacturing method of said composite material, and the method comprises the following procedures:
(a) provide a kind of substrate elastomer;
(b) provide a kind of textile of aromatic polyamide;
(c) the textile of aromatic polyamide is immersed in a silane solution, and the surface is processed; and
(d) said substrate elastomer and the textile of aromatic polyamide with surface processing are laminated together.

Another perspective of the present invention is to provide the application of the laminated composite material in the manufacturing of windshield connecting the rail cars as well as the application of said composite material in the manufacturing of rubber pipelines.

The laminated composite material as well as the manufacturing method is further explained in detail with reference to the figures as follows.

### BRIEF DESCRIPTION OF THE DRAWING(S)

Figure 1 is the diagram of a sample of the laminated material specified in the present patent.
Figure 2 is the sectional diagram of the laminated composite material used in peeling adhesion experiments.
Figure 3 is the diagram of a sample of the single strand peeling used in peeling adhesion experiments.

### DETAILED DESCRIPTION OF THE INVENTION

For the laminated composite material specified in the present invention, there is at least a layer of elastomer. There is no specific restriction of said elastomer, depending on the specific application.

In the present invention, usually the terms of "elastomer" and "rubber" can be used interchangeably, and it includes not only thermoset elastomers, but also thermoplastic elastomers.

In one of the preferred embodiments of the present invention, the unlimited examples of said elastomer include organic silicon elastomers, chlorosulfonated polyethylene, methacrylate elastomers, ethylene-methacrylate copolymer elastomer, chloroprene rubber, ethylene-propylene rubber, ethylene-propylene trimer rubber, butadiene-acrylonitrile rubber, natural rubber, butadiene-styrene rubber, chloro-ether rubber, butyl rubber, halogenated butyl rubber, polyurethane elastomer, and the like, as well as the mixtures thereof.

Based on need, said elastomer can also include one or multiple kinds of commonly used existing additives in this field, such as a plasticizer, filler, fire retardant, vulcanizing agent, anti-aging agent, vulcanization activator, antioxidant, reinforcing agent, toughening agent, anti-scorching agent, anti ultraviolet light stabilizer, antistatic agent, thixotropic agent, heat stabilizer, lubricant, catalyst, pigment and the like. The person skilled in the art can easily choose an appropriate additive as well as the amount to be used based on the specific application as well as their professional knowledge.

According to the requirements of specific application, reinforced fiber can be added into the elastomer specified in the present invention. There is no specific restriction in the appropriate reinforced fiber as well as the means of fiber reinforcement, and they can be any existing reinforced fiber known to this field and applicable to the elastomer. For example, the reinforced fiber with surface processing and the elastomer with reinforced fiber specified in the unexamined Japanese patent JP 2002-194669 can be used, and that Japanese patent is included into the present patent as a reference and part of the present patent.

The elastomers applicable to the present invention can also be purchased on the market, for example, the following products can be used: organic silicon elastomers with the brand name of Elastosil^{®} 401/70, 420/60 or 420/70 purchased from Wacker Chemie AG; Hypalon^{®} 40, chlorosulfonated polyethylene elastomer purchased from E.I. duPont de Nemours (DuPont) of the United States; or Vamac^{®} G elastomer, ethylene-elastomer purchased from DuPont and of the United States.

In the present invention, the laminated composite material includes at least one layer of textile of aromatic polyamide fiber. In the present invention, the term "textile" includes woven textile or nonwoven textile, also includes the twisted aromatic polyamide fiber.

The unlimited examples for the aromatic polyamide fiber forming the above mentioned textile can be selected from poly(p-phenylene terephthalamide) fiber, poly(p-phenylene terephthalamide) copolymer fiber, polyterephthalamide fiber, polyterephthalamide copolymer fiber, poly(sulfone amide) fiber, poly(sulfone amide) copolymer fiber, poly(m-phenylene isophthalamide) fiber and the like, as well as the fibers formed by the mixture of any two or multiple kinds of polymers.

There is no special restriction on the water content of the above mentioned aromatic polyamide fiber, and the aromatic polyamide fiber with any water content can be used. However, in order to decrease the weight of the final composite product, the water content of the aromatic polyamide fiber is usually controlled to below 10%, for example, 0.1 % to 8%, and it is preferred to be 3 to 7%, etc.

In a preferred embodiment, said textile layer is composed of 100% aromatic polyamide fiber. In another preferred embodiment, said textile is composed of the mixture of aromatic polyamide fiber and other fibers, and said other fibers include: glass fibers, polyester fibers, polyamide fibers, poly(vinyl alcohol) fibers, cotton fibers, polyvinyl formal staple (Vinylon) fibers, man-made fibers, viscose fibers, polyamide fibers, polyvinyl chloride fibers, polyacrylonitrile fibers, basalt fibers, polyethylene fibers, polypropylene fibers and the like. In the mixture fibers formed by this method, the weight ratio of the aromatic polyamide fiber and said other fibers is 60-99:40-1, it is preferred to be 80-98:20-2; and it is even preferred to be 90-95:10-5.

There is no special restriction on the fibrousness of the aromatic polyamide fiber, depending on the application. In one of the preferred embodiments in the present invention, the fiber size of said fiber is from 800 to 3000 denier, and it is preferred to be 1000 to 1500 denier.

The fibers applicable for the textile layer specified in the present invention can be purchased from the market. For example, it can be Kevlar® 129, of which the fibrousness is 1000 denier, purchased from DuPont of the United States; Kevlar® 29: a kind of aromatic polyamide fiber, poly(p-phenylene terephthalamide (polyamide), the fibrousness is 1500 denier, purchased from DuPont of the United States; Nomex^{®} T430: a kind of aromatic polyamide fiber (poly(m-phenylene isophthalamide) fiber), the fibrousness is 1200 denier, purchased from DuPont of the United States.

There is no special restriction on the base weight of the textile in the layered composite material specified in the present invention, depending on the specific application. In one of the preferred embodiment, the base weight of said textile layer is 50 to 800 g/m², it is preferred to be 75 to 600, and it is even more preferred to be 90 to 400.

The textile layer specified in the present invention can be prepared with any conventional method. For example, aromatic polyamide fiber is woven to plain textile on a weaving machine, its warp density and weft density can be 60 to 110 threads per 10 cm respectively, and it is preferred to be 70 to 100 thread, and it is even more preferred to be 80 to 90 thread.

There is no special restriction on the thickness of the textile of the layered composite material applicable to the present invention, depending on the specific application. In one of the preferred embodiments of the present invention, the thickness of said textile is 0.05 to 2 mm, the thickness of 0.1 to 1 mm is preferred, and the thickness of 0.15 to 0.5 mm is even more preferred.

In the present invention, the surface of the textile of aromatic polyamide fiber in the laminated composite material is processed with silane to improve the surface joint strength between the textile of the aromatic polyamide fiber and the surface of the elastomer. There is no special restrictions on the silane applicable for the treatment of the textile of aromatic polyamide fiber specified in the present invention, and it can be any silane commonly used to process the aromatic polyamide fiber in this field.

In one of the preferred embodiments of the present invention, the following silanes with the common formulas are used:

Aₓ₋((CH₂)_{y}Si(OR₁)ₘ(OR₂)ₙ )ₖ, or Si(OR₃)₄

Wherein A is selected from the functional groups such as a vinyl group, methacrylic group, dehydrated glycerol ether group, epoxy cyclo-hexyl group, mercapto group, octanoylthio group, sulfur, halogen, amino group, ethylene diamine group, isobutyl amino group, aniline group, urea group, isocyanide group, and the like;
X is an integer from 1 to 4;
Y is an integer from 0 to 6;
R₁ is an alkyl group or ether group containing 1 to 4 carbon atoms;
R₂ and R₃ are alkyl groups containing 1 to 3 carbon atoms, respectively;
M, n and k are integers from 1 to 3.

The above mentioned silanes can be purchased from the market. In one of the preferred embodiments in the present invention, the silane was purchased from Momentive Performance Material Co., and the details of said silane are shown in Table 1.

**Table 1 Applicable silanes purchased from Momentive Performance Co.**

| Symbol of silane | Chemical name | Chemical Structure |
|---|---|---|
| A-174 | γ-trimethoxysilane propyl methacrylate | CH₂=C(CH ₃)CO₂CH₂CH₂CH₂Si(OCH₃)₃ |
| A-187 | γ-glycidol ether propyl trimethoxysilane | 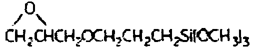 |
| A-186 | β-(3,4-epoxy cyclohexane)ethyl trimethoxy silane | 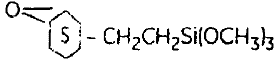 |
| A-189 | γ-mercapto propyl trimethoxy silane | HSCH₂CH₂CH₂Si(OCH₃)₃ |
| A1120 | N-β-(aminoethyl)-γ-aminopropyl trimehthoxy silane | H₂NCH₂CH₂NHCH₂CH₂CH₂Si(OCH₃)₃ |
| A-1524 | γ-carbaminopropyl trimethoxy silane | H₂NCONHCH₂CH₂CH₂Si(OCH₃)ₓ(OCH₂ CH₃)₃₋ₓ |
| A-Link 35 | γ-trimethoxysilane propyl isocyanate | O=C=NCH₂CH₂CH₂Si(OCH₃)₃ |

There is not special restriction on the surface processing method with silane applicable to the textile of aromatic polyamide fiber, and it can be any conventional method in this field. In one of the preferred embodiments in the present invention, the surface of the textile to be surface processed with silane is first cleaned to remove any grease, dirt, etc. on the surface that may impact the effect of surface processing with silane.

The applicable surface cleaning method is well known in this field. In one of the preferred embodiments in the present invention, the textile of aromatic polyamide to be surface processed is immersed in an aqueous solution containing 1g/l of detergent and 1g/l sodium carbonate at 80°C for at least 30 minutes, and then the textile is rinsed with clean hot water until there is no bubbles and grease.

The applicable detergents can be any detergent that are helpful for cleaning the surface grease, such as household detergents sold in the market, including powder laundry detergents, liquid detergents as well as the detergents used in a kitchen.

The silane used for surface processing can be the silane solution in water or an organic solvent. There is no special restriction on the applicable solvent for the preparation of the silane solution, and it can be any commonly used solvent in this field. The unlimited examples of applicable organic solvent include C₁₋₈ alkyl alcohol, such as methanol, ethanol, n-propanol, iso-propanol, n-butanol, tert-butanol, and the like; esters, such as ethyl ester, propyl ether, n-butyl ether, tetrahydrofuran and the like; acids, such as formic acid, acetic acid, etc. as well as the mixtures of two or multiple solvents thereof.

In one of the preferred embodiments, silane is dissolved in an applicable solvent and prepared into a solution of 5 to 15% in weight concentration, the preferred is the solution of 8 to 12%, and further preferred is the solution of 9 to 11 %, then glacial acetic acid is added into the solution to make the concentration to be 0 to 3 wt%, and the preferred is the solution in 0.8 to 1.2 wt%. Then the mixed solution is stirred for 0.1 to 2 hours under room temperature, and it is preferred to stir it for 0.3 to 1 hour.

There is no special restriction on the method of surface processing with the silane solution for the textile of aromatic polyamide, and the method can be any known method in this field. In one of the preferred embodiments in the present invention, the surface cleaned textile is soaked in the above mentioned silane solution, and there is no special restriction on the immersing time, as long as the textile of aromatic polyamide is comprehensively soaked in the above mentioned silane solution. In one of the preferred embodiments in the present invention, said immersing time is from 0.05 to 18 hours, it is preferred to be 0.1 to 12 hours, and it is even preferred to be 0.5 to 8 hours. There is no special restriction on the temperature for immersing the textile, and it can be any immersing temperature known to this field. In one of the preferred embodiments in the present invention, the immersing temperature is 10 to 40°C, and it is preferred to immerse at room temperature. After the textile is immersed in the silane solution, it is taken out, after the solvent is evaporated naturally at room temperature, it is processed with heat in an oven. The usual temperature of the oven is from 50 to 250°C, and it is preferred to be 80 to 200°C. The time of heat processing is usually from 0.5 to 10 minutes, and it is preferred to be 1 to 3 minutes. Then the textile is taken out.

In the present invention, the terms "layered composite material", "laminated composite material" and "laminated composite material that can be used interchangeably" refer to one layer of elastomer and at least one layer of the textile of aromatic polyamide. It is preferred to be the composite material laminated by multiple layers of elastomers and multiple layers of textiles of aromatic polyamide alternatively.

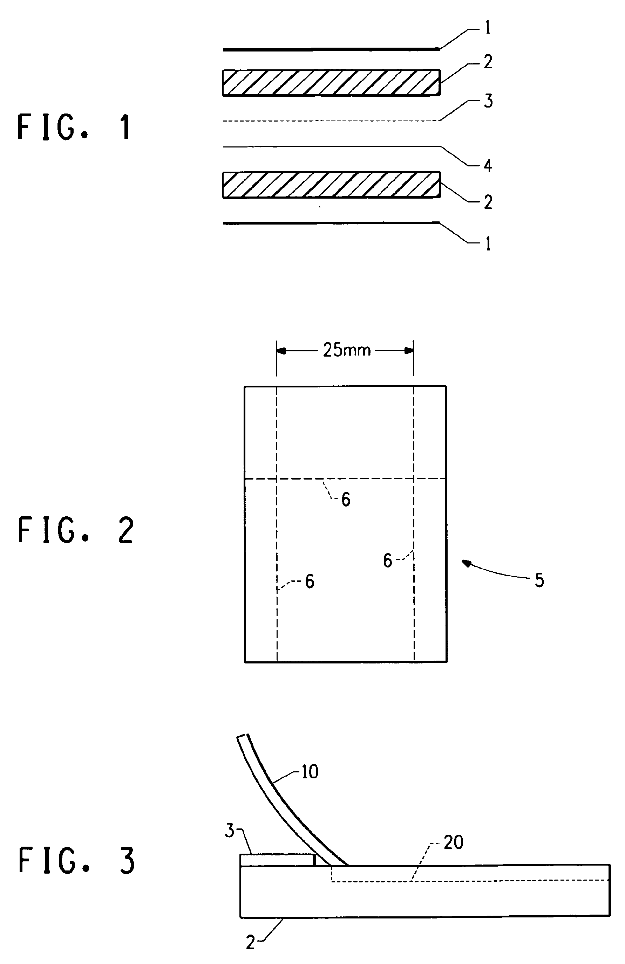

There is no special restriction on the method that forms the laminated material by laminating the elastomer and the silane processed textile specified in the present invention, and it can be any conventional, known method in this field. In one of the preferred embodiments in the present invention, in a square mold, a pieces of uncured elastomer of 3 mm in thickness and of the same dimension of the mold is placed into the mold, then a same size of textile is cut and laid on the surface of the elastomer, then another layer of the same sized elastomer is laid on the textile, and then the other half of the mold is closed. The mold is placed in a pre-heated flat curing machine, and the preheating temperature is 14°C to 200°C, it is preferred to be 160 to 180°C, and it is even preferred to be 165 to 170°C. Then pressure is applied. There is no special restriction to the pressure applied, as long as the aromatic polyamide fiber and the elastomer can be well laid. In one of the preferred embodiments in the present invention, the applied pressure is 5 to 10 tons, it is preferred to be 6 to 8 tons, and it is even preferred to be 6.5 to 7.5 tons. Then the material is cured for 10 to 30 minutes at the temperature from 140 to 200°C, it is preferred to be 160 to 180°C, and it is even preferred to be 165 to 170°C, and it is preferably to have the curing time of 15 to 25 minutes, and it is even preferred to be 18 to 22 minutes. After that, the mold is taken out, then the sample is taken out of the mold, and naturally cooled down at room temperature. The cooling time is usually longer than 8 hours, such as 8 to 15 hours, etc. Figure 1 is a diagram of the sample of the laid composite material specified in a preferred embodiment of the present invention. The laid material specified in the present invention comprises textile 4, and elastomer 2 that is joined on the two opposite surfaces of textile 4. In order to facilitate the peeling adhesion experiment, a stripe of polyester thin film 3 of 25 mm in width is inserted into the surface between the textile 4 and the elastomer 2 in the sample shown in Figure 1 in order to easily separate elastomer 2 and textile 4 after curing the process. In the textile reinforced elastomer of laid composite material of this embodiment, a layer of cotton lining 1 is applied on outer surfaces of the elastomer layers 2 as shown in Figure 1.

Compared with the elastomer laid composite material formed by the textile without being processed by the silane, in the present invention, through silane processing to reinforce the textile, the adhesion strength between the elastomer (i.e. the substrate to be reinforced) and the textile is increased by at least 100%, and it can reach 1266% at the highest, and thus satisfy the special requirements of the applications that require high joint strength. While the present technique can only improve the joint strength (peeling strength) between the aromatic polyamide fiber and the substrate (epoxy resin) by 38.5% (U.S. patent, 4,968,560) or improve the joint strength (peeling strength) between the aromatic polyamide fiber and the substrate (thermoplastic substrate resin or thermoset substrate resin) by 36% (Japanese unexamined patent, JP 2002194669).

On another hand, the present invention also provides a kind of preparation method for the laminated composite material, which comprises the following procedures:
(a) provide a kind of substrate elastomer;
(b) provide a kind of textile of aromatic polyamide;
(c) the textile of aromatic polyamide is immersed in a silane solution, and the surface is processed; and
(d) said substrate elastomer and the textile of aromatic polyamide with surface processing are laid together.

On another hand, the present invention provides the application of the laminated composite material in the manufacturing of windshield connecting the rail cars of a train.

On another hand, the present invention provides the application of the kind of composite material in the manufacturing of rubber pipelines.

The present invention is further explained with the following preferred embodiments. Except for additional description, in the description or the preferred embodiments of the present invention, all of the portion or percentage is parts by weight or weight percentage.

The following materials are used in the preferred embodiments as follows:
Aromatic polyamide fiber

| | |
|---|---|
| Kevlar^{®} 129: | - a kind of aromatic para-polyamide fiber (poly(p-Phenylene terephthalamide)), 1000 denier, purchased from DuPont, United States; |
| Kevlar^{®} 29: | - a kind of aromatic para-polyamide fiber (poly(p-Phenylene terephthalamide)), 1500 denier, purchased from DuPont, United States; |
| Nomex^{®} T430: | - a kind of aromatic meta-polyamide fiber (poly(m-phenylene isophthalamide)), 1200 denier, purchased from DuPont, United States. |

Elastomers

| | |
|---|---|
| Elastosil^{®} 401/70: | - a kind of organic silicon elastomer, purchased from Wacker Chemie AG; |
| Elastosil^{®} 420/60: | - a kind of organic silicon elastomer, purchased from Wacker Chemie AG; |
| Elastosil^{®} 420/70: | - a kind of organic silicon elastomer, purchased from Wacker Chemie AG; |
| Hypalon^{®} 40: | - a kind of chlorosulfonated polyethylene elastomer, purchased from DuPont, United States; |
| Vamac^{®} G: | - a kind of ethylene-acrylate copolymer elastomer, purchased from DuPont, United States. |

Natural rubber: - it is milled with the following formulation: 52 parts by weight of No. 1 Ribbed Smoked Sheet, 13 parts by weight of butadiene-styrene rubber 1500, 22.8 parts by weight of N330 carbon black, 2.6 parts by weight of para-flux (manufactured by C. P. Hall), 1.3 parts by weight of stearic acid, 3.26 parts by weight of zinc oxide, 0.8 parts by weight of promoter MBS, 1.3 parts by weight of phenolformaldehyde resin SP-1068, 1.0 parts by weight of anti-aging agent TMQ, and 2.2 parts by weight of insoluble sulfur.

### Silane

| | |
|---|---|
| A-174: | - A type of γ*-*trimethoxysilane propyl methacrylate, purchased from Momentive Performance Materials Co. Inc. |
| A-187: | - A type of γ-glycidol ether propyl trimethoxysilane, purchased from Momentive Performance Materials Co. Inc. |
| A-186: | - A type of β-(3, 4-epoxy cyclohexane) ethyl trimethoxy silane, purchased from Momentive Performance Materials Co. Inc. |
| A-189: | - A type of γ-mercapto propyl trimethoxy silane, purchased from Momentive Performance Materials Co. Inc. |
| A1120: | - A type of N-β-(aminoethyl)-γ-aminopropyl trimehthoxy silane, purchased from Momentive Performance Materials Co. Inc. |
| A-1524: | - A type of γ-carbaminopropyl trimethoxy silane, purchased from Momentive Performance Materials Co. Inc. |
| A-Link 35: | - A type of γ-trimethoxysilane propyl isocyanate, purchased from Momentive Performance Materials Co. Inc. |

### Preparation of the textile of aromatic polyamide

### (1) Kevlar^{®} cloth 802G:

On a weaving machine (model number is Rapier PTV 4/S, purchased from Domier Company), Kevlar^{®} 129 fiber was woven into a plain weave fabric, the warp and weft density of the textile were all 87 threads per 10 cm, the base weight was 198 g/m², and the thickness was 0.25 mm. In the following preferred embodiments, that cloth was assigned to a code of 802G.

The following refining cleaning method was used to remove the grease on the surface of 802G: it was immersed in the solution (80°C aqueous solution with of 1 g/l of poly(ethylene glycol) octyl phenyl ether (brand name Triton X-100) and 1 g/l sodium carbonate dissolved), the cloth was immersed for at least 30 minutes, and then it was rinsed with clean hot water until there was no bubbles and grease. In the following preferred embodiments, the refining cleaned cloth was assigned to a code of 802S.

### (2) Kevlar^{®} thread

On a ring spinning yam machine (i.e., a ring twister) (model number is TDM-10/250, purchased from Twistechnology S.L, Spain), 1500 denier Kevlar^{®} 29 fiber was twisted into 1500/2×3, and the strength of twisting was 195 twist/meter for initial twisting in the Z direction, and 195 twist/meter for repeated twisting.

### (3) Nomex^{®} cloth

On a weaving machine (model number is Rapier PTV 4/S, purchased from Dornier Company), Nomex^{®} T430 fiber was woven into a plain weave fabric, the warp and weft density of the textile were all 91 threads per 10 cm, the base weight was 460 g/m², and the thickness was 0.6 mm. In the following preferred embodiments, that cloth was assigned to a code of 602G.

### Preparation of silane solution

The silanes shown in Table 2 were dissolved in the solvents show in Table 2, and prepared into solutions having a weight concentration of 10%, and then glacial acetic acid was added into the solution to make the concentration reach 1%. For some silanes, it is not necessary to add glacial acetic acid. The mixed solution was stirred at room temperature for 1 hour. For the purpose of comparison experiment, blank solutions were also prepared, i.e., the solutions of solvent and acetic acid without silane. The detailed information of the solutions is shown in Table 2.

**Table 2 Silane solutions**

| Solution | Silane | Solvent | Silane: Solvent: Glacial Acetic Acid (weight ratio) |
|---|---|---|---|
| 1 | γ-glycidol ether propyl trimethoxysilane (A187) | Isopropanol | 10:90:1 |
| 2 | none | Isopropanol | 0:90:1 |
| 3 | γ-trimethoxysilane propyl methacrylate (A-174) | Isopropanol | 10:90:1 |
| 4 | β-(3,4-epoxy cyclohexane) ethyl trimethoxy silane (A-186) | Isopropanol | 10:90:1 |
| 5 | γ-mercapto propyl trimethoxy silane (A-189) | Isopropanol | 10:90:1 |
| 6 | N-β-(aminoethyl)-γ-aminopropyl trimehthoxy silane (A1120) | Tetrahydrofuran | 10:90:0 |
| 7 | γ-carbaminopropyl trimethoxy silane (A-1524) | Isopropanol | 10:90:1 |
| 8 | γ-trimethoxysilane propyl isocyanate (A-Link 35) | Isopropanol | 10:90:0 |

### Silane processing of the surface of the textiles

The above prepared textiles were immersed in the above prepared solutions respectively, and the immersing time is shown in Table 3. Then the textiles were taken out, and after the solvent was naturally evaporated at room temperature, they were heat processed in an oven for a certain period of time to obtain the samples of textiles with silane processing.

**Table 3 Test Sample of textile treated by a silane solution**

| Test sample | Textile | Solution | Soaking time | Heat treatment temperature in the oven after soaking (°C) | Heat treatment time |
|---|---|---|---|---|---|
| Control sample 1 | 802S | None | None | None | None |
| Control sample 2 | 802G | None | None | None | None |
| Test sample 3 | 802S | 1 | 12 hours | 80 | 3 min |
| Test sample 4 | 802S | 1 | 12 hours | 200 | 1 min |
| Control sample 5 | 802G | 2 | 12 hours | 80 | 3 min |
| Test sample 6 | 802G | 1 | 12 hours | 80 | 3 min |
| Test sample 7 | 802G | 1 | 3 min | 80 | 3 min |
| Control sample 8 | 802S | 2 | 12 hours | 80 | 3 min |
| Test sample 9 | 802S | 1 | 3 min | 80 | 3 min |
| Test sample 10 | 802S | 3 | 1 hour | 80 | 3 min |
| Test sample 11 | 802S | 4 | 1 hour | 80 | 3 min |
| Test sample 12 | 802S | 5 | 1 hour | 80 | 3 min |
| Test sample 13 | 802S | 6 | 1 hour | 80 | 3 min |
| Test sample 14 | 802S | 7 | 1 hour | 80 | 3 min |
| Test sample 15 | 802S | 8 | 1 hour | 80 | 3 min |
| Control sample 16 | 802S | none | none | none | none |
| Test sample 17 | 802S | 1 | 1 hour | 80 | 3 min |
| Test sample 18 | 802S | 3 | 1 hour | 80 | 3 min |
| Test sample 19 | 802S | 6 | 1 hour | 80 | 3 min |
| Test sample 20 | 802S | 7 | 1 hour | 80 | 3 min |
| Test sample 21 | 802S | 8 | 1 hour | 80 | 3 min |

### Preparation of the samples of laminated composite material of aromatic polyamide textile and elastomer

The preparation procedures for the samples of laminated composite material are as follows: in a square mold, a pieces of uncured elastomer of 3 mm in thickness and of the same dimension of the mold was placed into the mold, then a same size of textile was cut and laid on the surface of the elastomer, then another layer of the same sized elastomer was laid on the textile. For the convenience of the experiment, in the laminated material, a layer of cotton cloth was attached to the upper and bottom surfaces of the elastomer to reinforce the elastomer, and make the elastomer not deform in the later peeling adhesion experiment. Then a stripe of polyester thin film of 25 mm wide was inserted into the surface between the textile and the elastomer in order to easily separate elastomer and the textile after curing. The diagram of lamination of the sample is shown in Figure 1.

After the laminated composite material for testing was prepared, the other half of the mold was closed. The mold was placed in a pre-heated flat curing machine at the temperature of 165°C (model PHI S30R1818S-3LCS-L-M-S7-19, purchased from PHI Company, United States). 7 tons of pressured was applied on the mold, and it was cured for 20 minutes at the temperature between 165°C and 170°C. Next, the mold was taken out, the sample was taken out of the mold, and naturally cooled down at the temperature of 23°C and relative humidity of 55% for at least 8 hours before the peeling adhesion experiment was carried out.

### Adhesion experiment

As shown in Figure 2, the sulfurated laminated composite material was cut into sample stripes 5 of 100 mm long and 30 mm wide along the direction perpendicular to the direction of the polyester thin film 3. Next, the region of 25 mm wide was marked along the longitudinal direction, one side of the elastomer 2 is carefully cut along the direction of the mark (i.e., along the dotted lines 6 shown in figure 2) until the textile 4 was reached without damaging the textile 4. Then the elastomer and the textile 4 are carefully separated from the side separated by the polyester thin film 3.

The separated elastomer without textile was clipped on the upper clipper of the elongation test machine (model 5567, purchased from Instron Company, United States), and the end with textile was clipped on the lower clipper. Then the clippers were turned on to separate the textile and the elastomer at the speed of 100 mm/min. The computer connected to the elongation test machine automatically recorded the stress-strain curve of peeling. Finally, the maximum and the average values of peeling of the textile and the elastomer were summarized. The average value was calculated according to the ISO standard 6133:1998.

### Preferred embodiments 1-2 and comparison embodiment 1

The present preferred embodiment compares the impact of the textile that is formed through surface processing with different silane solutions and blank solution on the peeling adhesion strength to elastomer, and the impact on peeling adhesion strength of the textile under different conditions of heat processing after immersing.

As described previously, sample 3 and sample 4 of aromatic polyamide textiles with surface processing and control sample 1 were prepared. The silane solution for surface processing was the solution of γ-glycidol ether propyl trimethoxysilane of 10 wt% (the weight ratio of silane to isopropanol to acetic acid was 10:90:10). The textile was immersed in the silane solution for 12 hours. The textile was laminated with Elastosil^{®} 401/70 as shown in Figure 1, and the method shown in Figure 2 was used for testing the peeling adhesion property after cutting. For each sample, the parallel experiments were carried out for 5 times, and the arithmetic average of the data of 5-time experiments was the average peeling adhesion strength of the sample (Newton is the unit), and the results are shown in Table 4.

**Table 4. Peeling adhesion strength of silane-treated Kevlar^{®} (802S) with organic elastomer Elastosil^{®} 401/70**

| Example | Test Sample | Heat treatment condition Oven temperature/time | Average peeling adhesion (N) | Average Increasing rate of peeling adhesion |
|---|---|---|---|---|
| Comparativ e example 1 | Control sample 1 | - | 7.77 | - |
| Example 1 | Test sample 3 | 80°C/3min | 68.18 | 777% |
| Example 2 | Test sample 4 | 200°C/1min | 62.36 | 703% |

As can be seen from the above experimental results, when two different kinds of processing conditions were used in preferred embodiment 1 and preferred embodiment 2, the improvement of peeling adhesion was improved by more than 700% (in preferred embodiment 1, the improvement was 777%, and in preferred embodiment 2, the improvement was 703%), and this proves that the adhesion strength between the reinforced textile and the elastomer in the laminated material specified in the present patent is significantly higher than the adhesion strength between the reinforced fiber and the substrate material in the existing technology (compared with the unprocessed fiber, the adhesion strength between the reinforced fiber and the epoxy resin is increased by 38.5% at the most specified in US patent 4,968,560; in Japanese patent, JP 2002194669, the adhesion strength between the reinforced fiber and the substrate resin is increased by 36% at the most). In the mean time, the above experimental results also clearly indicate that the adhesion strength has significant increase in very wide range of heat processing, compared with the narrow processing window demonstrated in the existing technique (such as Japanese patent JP 2002-194669), there is significant improvement.

### Preferred embodiments 3-5 and comparison embodiments 2-4

In the present embodiment and comparison embodiment, for the same elastomer, the impact of the refining cleaning of the aromatic polyamide fiber, the solution for surface processing of the textile, as well as the post treatment method on the final peeling adhesion strength were compared.

As can be seen in Table 5 for the prepared surface-processed aromatic polyamide textile sample and the control sample, they were laminated with Elastosil^{®} 420/60 elastomer as shown in Figure 1, the sample was cut with the method shown in Figure 2, and the peeling adhesion property was tested. For each sample, the parallel experiments were carried out for 5 times, and the arithmetic average of the data of 5-time experiment was the average peeling adhesion strength of the sample (Newton is the unit), and the results are shown in Table 5.

**Table 5. Peeling adhesion of organic silicon elastomers with textiles treated by different processes**

| Example | Test sample | Textile | Cleaning and refinin g | Silane solution | Soaking time | Post treatment oven temperature/heating time | Average peeling adhesion (N) | Average rate increase of peeling adhesion |
|---|---|---|---|---|---|---|---|---|
| Comparative example 2 | Control sample 2 | 802G | none | - | - | | 17.02 | - |
| Comparati ve example 3 | Test sample 5 | 802G | none | 90: 1 isopropanol: acetic acid | 12 hr | 80°C/3 min | 8.57 | -49.60% |
| Example 3 | Test sample 6 | 802G | none | 10 wt% solution of γ-glycidol ether propyl trimethoxysilane /isopropanol / acetic acid at weight ratio of 10/90/10 | 12 hr | 80°C/3 min | 42.59 | 150% |
| Example 4 | Test sample 7 | 802G | none | 10 wt% solution of γ-glycidol ether propyl trimethoxysilane /isopropanol / acetic acid at weight ratio of 10/90/10 | 3 min | 80°C/3 min | 31.59 | 85.60% |
| Comparatve example 4 | Test sample 8 | 802S | yes | 90:1 of isopropanol / acetic acid | 12 hr | 80°C/3 min | 15.01 | - |
| Example 5 | Test sample 9 | 802S | yes | 10 wt% solution of γ-glycidol ether propyl trimethoxysilane /isopropanol / acetic acid at weight ratio of 10/90/10 | 3 min | 80°C/3 min | 52.97 | 253%* |

| | | | | | | | | |
|---|---|---|---|---|---|---|---|---|
| * Ratio obtained by comparing with the control example 4 that does not contain any silane solution | | | | | | | | |

It can be obviously seen from the above experimental results that:
(a) There is no favorable impact on peeling adhesion strength with a blank solution without silane;
(b) It can be seen by comparing the data of preferred embodiment 3 and the data of preferred embodiment 4 that even with a short immersing time in a silane solution, the peeling adhesion strength can also have significant increase, i.e. extending the immersing time cannot significantly improve the peeling adhesion strength;
(c) It can be seen by comparing preferred embodiment 4 and preferred embodiment 5 that as expected, refining clean of the aromatic polyamide textile before silane processing can significantly increase the peeling adhesion strength.

### Preferred embodiments 6-11

The present preferred embodiment tested the impact of silane processing on the final peeling adhesion strength.

The aromatic polyamide textile 802S with surface processing was prepared as previously described, the silane solutions used for surface processing were shown in Table 6. The immersing time of the textile in silane solution was 1 hour, the oven temperature of post processing was 80°C, and the time in the oven was 3 minutes. The textile was laid on the elastomer of Elastosil^{®} 401/70 as shown in Figure 1, and peeling adhesion property was tested after the material was cut with the method shown in Figure 2. For each sample, the parallel experiments were carried out for 5 times, and the arithmetic average of the data of 5-time experiment was the average peeling adhesion strength of the sample (Newton is the unit), and the results are shown in Table 6.

**Table 6 Peeling adhesion strength of organic silicon elastomers with 802S textile treated by a different silane solution**

| Example | Test sampl e | Silane treatment solution | weight ratio of silane : solvent : acetic acid | Average peeling strength (N) | Increasing rate of peeling adhesion* |
|---|---|---|---|---|---|
| 6 | 10 | γ-trimethoxysilane propyl methacrylate | 10/90 (isopropanol) /1 | 32.29 | 315□ |
| 7 | 11 | β-(3,4-epoxy cyclohexane) ethyl trimethoxy silane | 10/90 (isopropanol) /1 | 15.89 | 105□ |
| 8 | 12 | γ-mercapto propyl trimethoxy silane | 10/90 (isopropanol) /1 | 18.21 | 134□ |
| 9 | 13 | N-β-(aminoethyl)-γ-aminopropyl trimehthoxy silane | 10/90 (tetrahydrofuran )/0 | 29.71 | 282□ |
| 10 | 14 | γ-carbaminopropyl trimethoxy silane | 10/90 (isopropanol) /1 | 30.59 | 294□ |
| 11 | 15 | γ-trimethoxysilane propyl isocyanate | 10/90 (isopropanol) /0 | 30.28 | 290□ |

| | | | | | |
|---|---|---|---|---|---|
| * Standard for comparison is untreated 802S textile, with average peeling adhesion being 7.77 N. | | | | | |

It can be seen from the above experimental results that although different kind of silane demonstrates different effect of adhesion improvement, the surface processing with silane can at least increase the peeling adhesion strength between the aromatic polyamide textile and the elastomer by 105%, which is greater than the increase in peeling adhesion strength with the existing technique, which is no more than 38.5% increase.

### Preferred embodiments 12-16, comparison embodiment 5

The present preferred embodiment and the comparison embodiment compared the impact of different silane processing agents on the peeling adhesion strength between Nomex^{®} textile and the organic silicon elastomer.

The aromatic polyamide textile Nomex^{®} with surface processing was prepared as previously described, and the silane solutions used for surface processing are shown in Table 7. The immersing time of the textile in silane solution was 1 hour, the oven temperature of post processing was 80°C, and the time in the oven was 3 minutes. The textile was laid on the elastomer of Elastosil^{®} 420/70 as shown in Figure 1, and peeling adhesion property was tested after the material was cut with the method shown in Figure 2. For each sample, the parallel experiments were carried out for 5 times, and the arithmetic average of the data of 5-time experiment is the average peeling adhesion strength of the sample (Newton is the unit), and the results are shown in Table 7.

**Table 7 Peeling adhesion property of Elastosil^{®} 420/70 organic silicon elastomer with Nomex^{®} textile treated by a different silane solution**

| Example | Test sample | Silane | Silane : solvent : acetic acid (weight ratio) | Average peeling strength (N) | Increasing rate of peeling adhesion |
|---|---|---|---|---|---|
| Comparative Example 5 | Control 16 | - | □ | 9.0 | - |
| 12 | Test sample 17 | γ-glycidol ether propyl trimethoxysilane | 10/90 (isopropanol)/1 | 51.5 | 472% |
| 13 | Test sample 18 | γ-trimethoxysilane propyl methacrylate | 10/90 (isopropanol)/1 | 32.06 | 256% |
| 14 | Test sample 19 | N-β-(aminoethyl)-γ-aminopropyl trimehthoxy silane | 10/90 (tetrahydrofuran) /0 | 122.9 | 1266% |
| 15 | Test sample 20 | γ-carbaminopropyl trimehthoxy silane | 10/90 (isopropanol)/1 | 27.2 | 202% |
| 16 | Test sample 21 | γ-trimethoxysilane propyl isocyanate | 10/90 (isopropanol)/0 | 56.4 | 527% |

It can be seen from the above experimental results that the peeling adhesion strength between Nomex^{®} textile with silane processing and the organic silicon elastomer is increased by at least 200%, and can be 12 times at the most.

### Preferred embodiments 17-31, comparison embodiments 6-8

The present preferred embodiment and the comparison embodiment tested the peeling adhesion strength between the aromatic polyamide processed with a silane solution and different elastomers with a kind of different method for determining adhesion.

### Test method of peeling adhesion experiment

Two threads of Kevlar^{®} 29 fiber (1500 denier, purchased from DuPont of the United States) was first twisted to 195 twist/meter along the Z direction, and then 3 threads of already twisted 1500/2 fiber was twisted to195 twist/meter along the S direction to form a thread with a tight structure, and that sample was assigned to a code of Kevlar^{®} 1500/2×3. The silane processing method was the same as that for the textile, with the immersing time being 1 hour, the temperature of heat processing being 80°C, and the time of heat processing being 3 minutes.

A piece of elastomer of an appropriate size was placed in a mold, a strip of polyester thin film of 25 mm wide was placed at the end of the elastomer, and then Kevlar^{®} 1500/2×3 was laid flat on the surface of the elastomer along the direction perpendicular to the stripe of the polyester thin film. On Kevlar^{®} 1500/2×3, another layer of elastomer was not laid. Next, a layer of cotton lining was attached to the back side of the elastomer. The mold was closed, and it was heat-pressed and cured with the same curing method described previously. The condition of heat pressing was the same as the conditions described previously. That method is known as single thread peeling. The diagram of the sample prepared with said method is shown in Figure 3.

As shown in Figure 3, on one end of elastomer 2 was a stripe of polyester thin film 3, one end of Kevlar^{®} 1500/2×3 thread 20 was composited with elastomer 2, and after the material was cured, that elastomer 2 was imbedded in, and the elastomer 2 was exposed to the other end of Kevlar^{®} 1500/2×3 thread 10 that was close to polyester thin film 2.

The heat pressed and cured sample sat for at least 8 hours in a standard laboratory before the peeling test was carried out. One end of Kevlar^{®} 1500/2×3 10 that was not composited with the elastomer was clipped on the upper clipper of the elongation test machine (model 5567, purchased from Instron Company, United States), and the end of the elastomer 2 with polyester thin film 3 was clipped on the lower clipper. Peeling was at the speed of 100 mm/min. The average peeling adhesion strength was calculated according to the ISO standard 6133:1998.

Table 8 lists the data of peeling adhesion strength between Kevlar^{®} 1500/2×3 processed with different silane and different elastomers.

**Table 8 Peeling adhesion data of silane-treated Kevlar^{®} 1500/2×3 with different elastomers**

| Example | Test sample | Silane | Silane/solventlac etic acid (weight ratio) | Elastomer | Average peeling strength (N) | Average increasing rate of peeling adhesion |
|---|---|---|---|---|---|---|
| Comparative example 6 | Control sample 22 | none | - | Natural rubber | 3.06 | - |
| 17 | Test sample 23 | γ-trimethoxysilane propyl methacrylate (A174) | 10/90 (isopropanol)/1 | Natural rubber | 4.2 | 37%* |
| 18 | Test sample 24 | β-(3,4-epoxy cyclohexane) ethyl trimethoxy silane (A186) | 10/90 (iospropanol)/1 | Natural rubber | 6.8 | 122%* |
| 19 | Test sample 26 | N-β-(aminoethyl)-γ-aminopropyl trimehthoxy (A1120) | 10/90 (tetrahydrofuran)/ 0 | rubber | 6.47 | 113%* |
| 20 | Test sample 27 | Test γ-carbaminopropyl trimethoxy 10/90 silane (A1524) | 10/90 (isopropanol)/1 | Natural rubber | 3.41 | 11.4%* |
| 21 | Test sample 28 | γ-trimethoxysilane propyl isocyanate (A-link35) | 10/90 (isopropanol)/0 | Natural rubber | 7.4 | 142%* |
| Comparative example 7 sample | Control 29 | None | □ | Hypalon^{®} 40 | 2.72 | - |
| 22 | Test sample 30 | γ-trimethoxysilane propyl methacrylate (A174) | 10/90 (isopropanol)/1 | Hypalon^{®} 40 | 5.07 | 87.8%** |
| 23 | Test sample 31 | β-(3,4-epoxy cyclohexane) ethyl trimethoxy silane (A186) | 10/90 (isopropanol)/1 | Hypalon^{®} 40 | 6.24 | 131.1%** |
| 24 | Test sample 33 | N-β-(aminoethyl)-γ-aminopropyl trimehthoxy (A1120) | 10/90 (tetrahydrofuran)/ 0 | Hypalon^{®} 40 | 6.21 | 130.0%** |
| 25 | Test sample 34 | γ-carbaminopropyl trimethoxy silane (A1524) | 10/90 (isopropanol)/1 | Hypalon^{®} 40 | 3.67 | 35.9%** |
| 26 | Test sample 35 | γ-trimethoxysilane propyl isocyanate (A-link35) | 10/90 (isopropanol)/0 | Hypalon^{®} 40 | 6.14 | 127.4%** |
| Comparative example 8 | Control sample 36 | none | □ | Vamac^{®} G | 1.66 | - |
| 27 | Test sample 37 | γ-trimethoxysilane propyl methacrylate (A174) | 10/90 (isopropanol)/1 | Vamac^{®} G | 2.43 | 46.4%*** |
| 28 | Test sample 38 | β-(3,4-epoxy cyclohexane) ethyl trimethoxy silane (A186) | 10/90 (isopropanol)/1 | Vamac^{®} G | 2.42 | 45.8%*** |
| 29 | Test sample 40 | N-β-(aminoethyl)-γ-aminopropyl trimehthoxy (A1120) | 10/90 (tetrahydrofuran) /0 | Vamac^{®} G | 3.08 | 85.5%*** |
| 30 | Test sample 41 | γ-carbaminopropyl trimethoxy silane (A1524) | 10/90 (isopropanol) /1 | Vamac^{®} G | 2.06 | 24.1%*** |
| 31 | Test sample 42 | γ-trimethoxysilane propyl isocyanate (A-link35) | 10/90 (isopropanol) /0 | Vamac^{®} G | 5.62 | 238.6%*** |

| | | | | | | |
|---|---|---|---|---|---|---|
| * comparing to comparative example 6 as the standard ** comparing to comparative example 7 as the standard *** comparing to comparative example 8 as the standard | | | | | | |

it can be seen from the above experimental results that when aromatic polyamide fiber is twisted into thread, the thread processed by silane can obtain good adhesion effect with the elastomer substrate as the textile woven on a weaving machine, and thus satisfy the requirements of preventing falling off of layers of the laminated material.

In summary, the laminated composite material prepared with the method specified in the present patent has the advantages of high strength of adhesion, simple processing, wide processing window and spacious design space of the textile.

## Claims

1. A laminated composite material, comprising at least one layer of elastomer and one layer of textile of aromatic polyamide fiber, and the surface of said textile of aromatic polyamide fiber is processed by silane.

2. The laminated composite material specified in Claim 1, wherein said elastomer is selected from the group consisting of organic silicon elastomers, chlorosulfonated polyethylene, methacrylate elastomers, ethylene-methacrylate copolymer elastomers, chloroprene rubbers, ethylene-propylene rubbers, ethylene-propylene trimer rubbers, butadiene-acrylonitrile rubbers, natural rubbers, butadiene-styrene rubbers, chloro-ether rubbers, butyl rubbers, halogenated butyl rubbers, polyurethane elastomers, and mixtures thereof

3. The laminated composite material specified in Claim 1, wherein the aromatic polyamide fiber to form said textile is selected from the group consisting of poly(p-phenylene terephthalamide) fiber, poly(p-phenylene terephthalamide) copolymer fiber, polyterephthalamide fiber, polyterephthalamide copolymer fiber, poly(sulfone amide) fiber, poly(sulfone amide) copolymer fiber, poly(m-phenylene isophthalamide) fiber and fibers formed by the mixture of any two or more of said polymers.

4. The laminated composite material specified in Claim 3, wherein the water content of said aromatic polyamide fiber is from 0.1 % to 10 wt%.

5. The laminated composite material specified in Claim 1, wherein said textile is composed of the mixture of aromatic polyamide fiber and other fiber, and said other fiber is selected from the group consisting of glass fiber, polyester fiber, polyamide fiber, poly(vinyl alcohol) fiber, cotton fiber, vinylon fiber, manmade fiber, viscose fiber, polyamide fiber, polyvinyl chloride fiber, polyacrylonitrile fiber, basalt fiber, polyethylene fiber, and polypropylene fiber and wherein the weight ratio of the aromatic polyamide fiber to said other fiber is 60-99:40-1.

6. The laminated composite material specified in Claim 1, wherein the fibrousness of said aromatic polyamide fiber is from 200 to 10000 denier.

7. The laminated composite material specified in Claim 1, wherein the base weight of said textile layer is from 50 to 600 g/m².

8. The laminated composite material specified in Claim 1, wherein the thickness of said textile layer is from 0.02 to 2 mm.

9. The laminated composite material specified in Claim 1, wherein the silane used for surface processing has the common formula:
Aₓ-((CH₂)_{y}Si(OR₁)ₘ(OR₂)ₙ)ₖ, or Si(OR₃)₄
wherein A is selected from a vinyl group, methacrylic group, dehydrated glycerol ether group, epoxy cyclo-hexyl group, mercapto group, octanoylthio group, sulfur, halogen, amino group, ethylene diamine group, isobutyl amino group, aniline group, urea group, isocyanate group;
x is an integer from 1 to 4;
y is an integer from 0 to 6;
R₁ is an alkyl group or ether group containing 1 to 4 carbon atoms;
R₂ and R₃ are alkyl groups containing 1 to 3 carbon atoms, respectively; and
m, n and k are integers from 1 to 3,
and preferably is selected from γ-trimethoxysilane propyl methacrylate, γ-glycidol ether propyl trimethoxysilane, β-(3,4-epoxy cyclohexane) ethyl trimethoxy silane, γ-mercapto propyl trimethoxy silane, N-β-(aminoethyl)-γ-aminopropyl trimehthoxy silane, γ-carbaminopropyl trimethoxy silane and γ-trimethoxysilane propyl isocyanate.

10. A process for producing the laminated composite material as specified in Claim 1, comprising:
(a) providing an elastomer substrate;
(b) providing a layer of textile of aromatic polyamide;
(c) immersing the textile of aromatic polyamide in a silane solution for surface processing and
(d) laminating said elastomer substrate and the surface-processed textile of aromatic polyamide.

11. The process specified in Claim 10, wherein the solvent for preparing the silane solution can be selected from the group consisting of water, C₁₋₈ alkyl alcohol, ether, acid, and mixtures of two or more thereof,
wherein said C₁₋₈ alkyl alcohol preferably is selected from the group consisting of methanol, ethanol, n-propanol, iso-propanol, n-butanol, and tert-butanol; said ether preferably is selected from the group consisting of ethyl ether, propyl ether, n-butyl ether, and tetrahydrofuran; and said acid preferably is selected from the group consisting of formic acid, and acetic acid.

12. The process specified in Claim 11, wherein said silane solution is prepared by dissolving said silane at 3 to 15 wt% in a non-acidic solvent, or wherein said silane solution is prepared by dissolving said silane at 3 to 15 wt% in a non-acidic solvent, and then adding glacial acetic acid to make the concentration reach 0.5 to 3 wt%.

13. The process specified in Claim 10, wherein the immersing time in the silane solution is from 0.01 to 18 hours.

14. The process specified in Claim 10, wherein after the textile of aromatic polyamide is surface-processed, the textile is heat-processed in an oven at 50°C to 250°C for 0.5 to 10 minutes.

15. Use of the laminated composite material specified in any of Claims 1 to 9 or obtainable by the process of any one of claims 10 to 14 for making the windshield connecting rail cars, or for making rubber pipelines.

## Patentansprüche

1. Laminiertes Verbundstoffmaterial, umfassend mindestens eine Schicht von Elastomer und eine Schicht von Gewebe aus aromatischer Polyamidfaser, und die Oberfläche des Gewebes aus aromatischer Polyamidfaser ist mit Silan bearbeitet.

2. Laminiertes Verbundstoffmaterial, spezifiziert in Anspruch 1, wobei das Elastomer aus der Gruppe, bestehend aus organischen Silicon-Elastomeren, chlorsulfoniertem Polyethylen, Methacrylat-Elastomeren, Ethylen-Metharylat-Copolymer-Elastomeren, Chloropren-Kautschuken, Ethylen-Propylen-Kautschuken, Ethylen-Propylentrimer-Kautschuken, Butadien-Acrylnitril-Kautschuken, natürlichen Kautschuken, Butadien-Styrol-Kautschuken, Chlorether-Kautschuken, Butylkautschuken, halogenierten Butylkautschuken, Polyurethan-Elastomeren und Gemischen davon, ausgewählt ist.

3. Laminiertes Verbundstoffmaterial, spezifiziert in Anspruch 1, wobei die aromatische Polyamidfaser zur Erzeugung des Gewebes aus der Gruppe, bestehend aus Poly(p-phenylen-terephthalamid)-Faser, Poly(p-phenylen-terephthalamid)-Copolymer-Faser, Polyterephthalamid-Faser, Polyterephthalamid-Copolymer-Faser, Poly(sulfonamid)-Faser, Poly(sulfonamid)-Copolymer-Faser, Poly(m-phenylenisophthalamid)-Faser und Fasern, erzeugt aus dem Gemisch von beliebigen zwei oder mehreren von den Polymeren, ausgewählt ist.

4. Laminiertes Verbundstoffmaterial, spezifiziert in Anspruch 3, wobei der Wassergehalt der aromatischen Polyamidfaser von 0,1 Gew.-% bis 10 Gew.-% beträgt.

5. Laminiertes Verbundstoffmaterial, spezifiziert in Anspruch 1, wobei das Gewebe aus dem Gemisch von aromatischer Polyamidfaser und anderer Faser besteht und die andere Faser aus der Gruppe, bestehend aus Glasfaser, Polyesterfaser, Polyamidfaser, Poly(vinylalkohol)-Faser, Baumwollfaser, Vinylonfaser, Chemiefaser, Viskosefaser, Polyamidfaser, Polyvinylchloridfaser, Polyacrylnitrilfaser, Basaltfaser, Polyethylenfaser und Polypropylenfaser, ausgewählt ist und wobei das Gewichtsverhältnis der aromatischen Polyamidfaser zu der anderen Faser 60-99:40-1 beträgt.

6. Laminiertes Verbundstoffmaterial, spezifiziert in Anspruch 1, wobei die Faserigkeit der aromatischen Polyamidfaser von 200 bis 10000 Denier beträgt.

7. Laminiertes Verbundstoffmaterial, spezifiziert in Anspruch 1, wobei das Flächengewicht der Gewebeschicht von 50 bis 600 g/m² beträgt.

8. Laminiertes Verbundstoffmaterial, spezifiziert in Anspruch 1, wobei die Dicke der Gewebeschicht von 0,02 bis 2 mm beträgt.

9. Laminiertes Verbundstoffmaterial, spezifiziert in Anspruch 1, wobei das für die Oberflächenbearbeitung verwendete Silan die allgemeine Formel:
Aₓ-((CH₂)_{y}Si(OR₁)ₘ(OR₂)ₙ)ₖ oder Si(OR₃)₄,
hat, wobei A aus einer Vinylgruppe, Methacrylgruppe, dehydratisierten Glycerolethergruppe, Epoxycyclohexylgruppe, Mercaptogruppe, Octanoylthiogruppe, Schwefel, Halogen, Aminogruppe, Ethylendiamingruppe, Isobutylaminogruppe, Anilingruppe, Harnstoffgruppe, Isocyanatogruppe ausgewählt ist;
x eine ganze Zahl von 1 bis 4 ist;
y eine ganze Zahl von 0 bis 6 ist;
R₁ eine Alkylgruppe oder Ethergruppe, enthaltend 1 bis 4 Kohlenstoffatome, ist;
R₂ und R₃ Alkylgruppen, enthaltend jeweils 1 bis 3 Kohlenstoffatome, sind; und
m, n und k ganze Zahlen von 1 bis 3 sind,
und vorzugsweise aus γ-Trimethoxysilanpropylmethacrylat, γ-Glycidoletherpropyltrimethoxysilan, β-(3,4-Epoxycyclohexan)ethyltrimethoxysilan, γ-Mercaptopropyltrimethoxysilan, N-β-(Aminoethyl)-γ-aminopropyltrimethoxysilan, γ-Carbaminopropyltrimethoxysilan und γ-Trimethoxysilanpropylisocyanat ausgewählt ist.

10. Verfahren zum Erzeugen des laminierten Verbundstoffmaterials, wie spezifiziert in Anspruch 1, umfassend:
(a) Bereitstellen eines Elastomersubstrats;
(b) Bereitstellen einer Schicht von Gewebe aus aromatischem Polyamid;
(c) Eintauchen des Gewebes aus aromatischem Polyamid in eine Silanlösung zur Oberfächenbearbeitung und
(d) Laminieren des Elastomersubstrats und des oberflächenbearbeiteten Gewebes aus aromatischem Polyamid.

11. Verfahren, spezifiziert in Anspruch 10, wobei das Lösungsmittel zum Herstellen der Silanlösung aus der Gruppe, bestehend aus Wasser, C₁₋₈-Alkylalkohol, Ether, Säure und Gemischen von zwei oder mehreren davon, ausgewählt werden kann,
wobei der C₁₋₈-Alkylalkohol vorzugsweise aus der Gruppe, bestehend aus Methanol, Ethanol, n-Propanol, iso-Propanol, n-Butanol und tert-Butanol, ausgewählt ist; der Ether vorzugsweise aus der Gruppe, bestehend aus Ethylether, Propylether, n-Butylether und Tetrahydrofuran, ausgewählt ist; und die Säure vorzugsweise aus der Gruppe, bestehend aus Ameisensäure und Essigsäure, ausgewählt ist.

12. Verfahren, spezifiziert in Anspruch 11, wobei die Silanlösung hergestellt wird, indem das Silan mit 3 bis 15 Gew.-% in einem nicht-sauren Lösungsmittel gelöst wird, oder wobei die Silanlösung hergestellt wird, indem das Silan mit 3 bis 15 Gew.-% in einem nicht-sauren Lösungsmittel gelöst wird und dann Eisessig hinzugefügt wird, um zu bewirken, dass die Silankonzentration 0,5 bis 3 Gew.-% erreicht.

13. Verfahren, spezifiziert in Anspruch 10, wobei die Eintauchzeit in der Silanlösung von 0,01 bis 18 Stunden beträgt.

14. Verfahren, spezifiziert in Anspruch 10, wobei, nachdem das Gewebe aus aromatischem Polyamid oberflächenbearbeitet worden ist, das Gewebe in einem Ofen bei 50°C bis 250°C für 0,5 bis 10 Minuten wärmebearbeitet wird.

15. Verwendung des laminierten Verbundstoffmaterials, spezifiziert in jedem der Ansprüche 1 bis 9 oder erhältlich durch das Verfahren nach einem jeden der Ansprüche 10 bis 14, zum Herstellen des Windschutzes, der Schienenfahrzeuge verbindet, oder zum Herstellen von Kautschukrohrleitungen.

## Revendications

1. Matériau composite stratifié, comprenant au moins une couche d'élastomère et une couche de textile de fibre polyamide aromatique, la surface dudit textile de fibre polyamide aromatique étant traitée par du silane.

2. Matériau composite stratifié selon la revendication 1, dans lequel ledit élastomère est choisi dans le groupe constitué des élastomères de silicone organique, du polyéthylène chlorosulfoné, des élastomères de méthacrylate, des élastomères de copolymère d'éthylène-méthacrylate, des caoutchoucs de chloroprène, des caoutchoucs d'éthylène-propylène, des caoutchoucs de trimère d'éthylène-propylène, des caoutchoucs de butadiène-acrylonitrile, des caoutchoucs naturels, des caoutchoucs de butadiène-styrène, des caoutchoucs de chloroéther, des caoutchoucs butyle, des caoutchoucs butyle halogénés, des élastomères de polyuréthane, et de leurs mélanges.

3. Matériau composite stratifié selon la revendication 1, dans lequel la fibre polyamide aromatique pour former ledit textile est choisie dans le groupe constitué de la fibre de poly(p-phénylène téréphtalamide), de la fibre de copolymère de poly(p-phénylène téréphtalamide), de la fibre de polytéréphtalamide, de la fibre de copolymère de polytéréphtalamide, de la fibre de poly(sulfone amide), de la fibre de copolymère de poly(sulfone amide), de la fibre de poly(m-phénylène isophtalamide) et des fibres formées par le mélange de deux quelconques ou plus desdits polymères.

4. Matériau composite stratifié selon la revendication 3, dans lequel la teneur en eau de ladite fibre polyamide aromatique est de 0, 1 % à 10% en poids.

5. Matériau composite stratifié selon la revendication 1, dans lequel ledit textile est composé du mélange d'une fibre polyamide aromatique et d'une autre fibre, ladite autre fibre étant choisie dans le groupe constitué des fibre de verre, fibre polyester, fibre polyamide, fibre de poly(alcool vinylique), fibre de coton, fibre de vinylon, fibre artificielle, fibre de viscose, fibre polyamide, fibre de polychlorure de vinyle, fibre de polyacrylonitrile, fibre de basalte, fibre de polyéthylène, et fibre de polypropylène, et dans lequel le rapport pondéral de la fibre polyamide aromatique à ladite autre fibre est de 60-99:40-1.

6. Matériau composite stratifié selon la revendication 1, dans lequel la fibrosité de ladite fibre polyamide aromatique est de 200 à 10 000 deniers.

7. Matériau composite stratifié selon la revendication 1, dans lequel le poids de base de ladite couche de textile est de 50 à 600 g/m².

8. Matériau composite stratifié selon la revendication 1, dans lequel l'épaisseur de ladite couche de textile est de 0,02 à 2 mm.

9. Matériau composite stratifié selon la revendication 1, dans lequel le silane utilisé pour le traitement de surface répond à la formule habituelle:
Aₓ-((CH₂)_{y}Si(OR₁)ₘ(OR₂)ₙ)ₖ, ou Si(OR₃)₄
dans laquelle A est choisi parmi un groupe vinyle, un groupe méthacrylique, un groupe éther de glycérol déshydraté, un groupe époxycyclohexyle, un groupe mercapto, un groupe octanoylthio, un soufre, un halogène, un groupe amino, un groupe éthylènediamine, un groupe isobutylamino, un groupe aniline, un groupe urée, un groupe isocyanato;
x est un entier de 1 à 4;
y est un entier de 0 à 6;
R₁ᵢ est un groupe alkyle ou un groupe éther contenant 1 à 4 atomes de carbone;
R₂ et R₃ sont des groupes alkyle contenant 1 à 3 atomes de carbone, respectivement; et
m, n et k sont des entiers de 1 à 3,
et de préférence est choisi parmi le méthacrylate de γ-(triméthoxysilyl)propyle, le γ-glycidoxypropyltriméthoxysilane, le β-(3,4-époxycyclohexyl)éthyltriméthoxysilane, le γ-mercaptopropyltriméthoxysilane, le N-β-(aminoéthyl)-γ-aminopropyltriméthoxysilane, le γ-carbaminopropyltriméthoxysilane et l'isocyanate de γ-(triméthoxysilyl)propyle.

10. Procédé de fabrication du matériau composite stratifié selon la revendication 1, comprenant:
(a) l'utilisation d'un substrat élastomère;
(b) l'utilisation d'une couche de textile de polyamide aromatique;
(c) l'immersion du textile de polyamide aromatique dans une solution de silane pour un traitement de surface et
(d) la stratification dudit substrat élastomère et du textile de polyamide aromatique à surface traitée.

11. Procédé selon la revendication 10, dans lequel le solvant pour la préparation de la solution de silane peut être choisi dans le groupe constitué de l'eau, d'un alcool alkylique en C₁₋₈, d'un éther, d'un acide, et de mélanges de deux ou plus d'entre eux,
dans lequel ledit alcool alkylique en C₁₋₈ est de préférence choisi dans le groupe constitué du méthanol, de l'éthanol, du n-propanol, de l'iso-propanol, du n-butanol, et du tert-butanol; ledit éther est de préférence choisi dans le groupe constitué de l'éthyléther, du propyléther, du n-butyléther, et du tétrahydrofurane; et ledit acide est de préférence choisi dans le groupe constitué de l'acide formique, et de l'acide acétique.

12. Procédé selon la revendication 11, dans lequel ladite solution de silane est préparée par dissolution dudit silane à 3 à 15% en poids dans un solvant non acide, ou dans lequel ladite solution de silane est préparée par dissolution dudit silane à 3 à 15% en poids dans un solvant non acide, puis ajout d'acide acétique glacial pour que la concentration atteigne 0,5 à 3% en poids.

13. Procédé selon la revendication 10, dans lequel la durée d'immersion dans la solution de silane est de 0,01 à 18 heures.

14. Procédé selon la revendication 10, dans lequel après avoir traité en surface le textile de polyamide aromatique, on fait subir à ce textile un traitement thermique dans une étuve entre 50°C et 250°C pendant 0,5 à 10 minutes.

15. Utilisation du matériau composite stratifié selon n'importe laquelle des revendications 1 à 9 ou susceptible d'être obtenu par le procédé selon l'une quelconque des revendications 10 à 14, pour la fabrication du pare-brise reliant des wagons, ou pour la fabrication de canalisations en caoutchouc.
